Europäisches Patentamt

European Patent Office

Office européen des brevets

(19)

(11) Publication number: **0 332 563**
A1

## (12) EUROPEAN PATENT APPLICATION

(21) Application number: **89500019.8**

(22) Date of filing: **28.02.89**

(51) Int. Cl.⁴: **H 01 M 4/80**
H 01 M 4/28, H 01 M 4/29

(30) Priority: **04.03.88 ES 8800662**

(43) Date of publication of application:
**13.09.89 Bulletin 89/37**

(84) Designated Contracting States:
**AT BE CH DE FR GB GR IT LI LU NL SE**

(71) Applicant: **SOCIEDAD ESPANOLA DEL ACUMULADOR TUDOR, S.A.**
**Condesa de Venadito, 1**
**28027 Madrid (ES)**

(72) Inventor: **Lopez-Doriga Lopez-Doriga, Juan Antonio**
**Cea Bermudez, 37**
**E-28003 Madrid (ES)**

(74) Representative: **Gomez-Acebo y Pombo, José Miguel**
**c/o CLARKE, MODET & Co. Paseo de la Castellana 164**
**E-28046 Madrid (ES)**

(54) Electrodes with an unwoven nickel blanket base and the method for obtaining them.

(57) Electrodes with an unwoven nickel blanket base and the method for obtaining them, said electrodes comprising a blanket of unwoven metal nickel fibrils, with variable porosity, in whose pores the active material of the electrode is contained, made up of a metal hydroxide, such as nickel or cadmium hydroxide. The method for obtaining these electrodes consists of the chemical or electrochemical deposition of an active material in the pores of the said unwoven nickel blanket at a temperature of up to 90°C and, in a given case, with a current density of 100 to 5,000 A/m². These electrodes are applied particularly in electric batteries.

## Description

## ELECTRODES WITH AN UNWOVEN NICKEL BLANKET BASE AND THE METHOD FOR OBTAINING THEM

This invention refers to electrodes, especially applicable to electric batteries, which have a base comprising an unwoven blanket of metal nickel fibrils. The invention also refers to a method for manufacturing these electrodes.

State-of-the-art

Nickel-cadmium rechargeable alkaline galvanic elements have been known for some time. Generally speaking, these elements include a rechargeable cadmium anode, a nickel oxide cathode and an alkaline electrolyte, such as an aqueous potassium hydroxide solution.

One of the main requirements of high power Ni/Cd elements is that the electrodes must have a large active surface and small electric resistance in order to obtain satisfactory discharges at high current intensities. Consequently, compared with the traditional technology of packed plates, sinterised nickel powder plates offered greatly improved high power performance, due to their highly porous structure, in whose pores the active matter was impregnated (see GB-PS 491,498 and US-PS 3,214,255 for example).

However, from the technological point of view, nickel plates, in specific cases, sinterised, have two important disadvantages :

1) The small size of the pores hamper the chemical or electrochemical impregnation process, which in some cases takes place under vacuum.

2) Thick plates (thicker than 1 mm.) are not easily obtainable, due to the sinterised joins breaking during cycling of the plates, due to the increased volume of the active material.

Advantages of the invention

The foregoing disadvantages are reduced by means of the electrodes in this invention, which have a base comprising an unwoven nickel or nickel alloy fibril blanket, with variable porosity, which has the active positive or negative material of that electrode deposited inside its pores.

Basically, the electrodes made according to this invention offer the following advantages :
- High current densities, low electric resistance.
- High porosity, leaving a large part of the volume of the electrode free for the active material.
- No additives are necessary (graphite, iron) which pollute the electrolyte.
- Sufficient elasticity for the guarantee of cycling.

Detailed description of the invention

According to a preferred embodiment of this invention, the porosity of the unwoven nickel fibril blanket can vary between 60 to 95%, preferably from 80 to 87% of its total volume.

In accordance with another preferred aspect of the invention, the active material placed in the pores of the said unwoven nickel fibril blanket is a metal hydroxide, chosen preferably between nickel and cadmium hydroxides.

According to a third preferred aspect of the invention, the unwoven nickel blanket comprises nickel or nickel alloy fibrils, with a diameter between 5 and 30 μm, and an average pore size of 10 to 50 μm.

According to a preferred embodiment of the method for making electrodes with an unwoven nickel blanket base, according to the invention, the impregnation of the unwoven nickel or nickel alloy blanket can take place through the chemical or electrochemical deposition of a metal hydroxide, chosen preferably between nickel hydroxide and cadmium hydroxide.

In accordance with the method which constitutes one of the objects of this invention, the chemical impregnation of the unwoven nickel or nickel alloy fibril blanket, is carried out by immersing it in an aqueous metal salt solution of the metal it is wished to deposit, such as nickel or cadmium nitrate, with a concentration between approximately 3 molars and the saturation point of the salt considered in water, which can contain impregnation enhancing additives of the substrate, formed by the unwoven nickel fibril blanket, such as organic solvents, miscible with water, with a low molecular weight. This metal salt solution is maintained at a high temperature, up to approximately its boiling point, the impregnation time depending on the features of the base, such as its porosity and thickness. The impregnated base is then dried, immersed in an alkaline metal hydroxide solution, such as sodium or potassium hydroxide, at a concentration of approximately 10 to approximately 40% in weight, and kept at a high temperature, thereby causing the precipitation of the metal hydroxide corresponding to the salt in the impregnation solution, such as nickel or cadmium hydroxide in the pores of the base.

The aforementioned operations can be repeated from 1 to 6 times, depending on the degree to which it is wished to charge the base with active material. Lastly, the electrodes are washed with abundant deionized water and they are dried in current of hot air.

According to a preferred aspect of this method, the aqueous metal salt solution used for impregnating, can contain up to 50% in volume of an organic solvent miscible with water, chosen from the group formed by alcohols with low molecular weight, such as preferably ethanol or isopropanol, ketones, such as acetone and the like.

According to another preferred aspect of this method, the metal salt impregnation solution is heated to a temperature between 60° C. and its boiling point, impregnation time being preferably from approximately 3 to 15 minutes.

According to another preferred aspect of the chemical impregnation method, according to the invention, the alkaline hydroxide solution usedhas a temperature of between 30 and 90°C.

According to this invention, the active material can also be deposited on the unwoven nickel or nickel alloy fibril base electrochemically, by passing a cathodic current through the unwoven nickel or nickel alloy blanket, which is immersed in an aqueous metal salt solution, such as nickel or cadmium salt, or in a mixture of water and organic solvents with low molecular weight, miscible with water, such as alcohols with low molecular weight, such as ethanol, ketones, such as acetone and the like, up to a total of 50 % in volume of the overall volume of the bath employed.

According to another aspect of this electroplating method, according to the invention, the metal salt solution also contains reducible anions, such as nitrates, chlorates, chromates, acetates or permanganates, for example, whose REDOX potential is more positive than that of the metal cations present, such as nickel or cadmium and, consequently, the preferred reduction of them takes place in the cathode. This leads to the consumption of protons and hence a surplus of OH⁻ ions near the electrode, which causes the precipitation of the respective metal hydroxides, such as nickel or cadmium hydroxides, in the pores of the unwoven nickel or nickel alloy blanket base; the preferred working conditions of this electrochemical deposition include a current density of between 100 and 5,000 A/m², a pH between 3 and 5, temperature between 50°C and the boiling point of the solution, and a nickel or cadmium metal salt concentration between 1.5 M and saturation point.

In these conditions, an electrode is obtained in which the active material is found in the pores, without any being deposited in the outer surface of the base, at the end of a period between approximately 10 and 120 minutes, depending on the conditions of the electrolysis carried out.

According to a preferred aspect of this method, according to the invention, the positive active material grips better to the fibres of the unwoven nickel or nickel alloy blan ket, thereby improving the use of the active material when the battery is discharged, through the periodical inversion of the polarity while the current passes through the bath containing the metal salt solution. The anodic pulses applied produce the superficial oxidation of the nickel which, in the following cathodic pulse, precipitates in the form of nickel hydroxide, distributed homogeneously throughout the inner surface of the unwoven nickel or anickel alloy base. The intensity and duration of the anodic pulse depend on the conditions of the electrolytic bath used in each case.

According to a preferred aspect of this method, according to the invention, the intensity of the anodic pulse should correspond to 10 or 20% of the intensity of the cathodic pulse and its duration is between 1/5 and 1/10 of the said cathodic pulse.

According to another preferred aspect of the invention, the nickel salt solution can also contain a cobalt salt which precipitates in the form of hydroxide in the porous unwoven base, together with the nickel hydroxide, in a concentration equivalent to 5-15% of the nickel salt concentration. The presence of cobalt hydroxide in the positive active material improves the cyclability of the electrodes.

According to a preferred aspect of this method, the formation of the positive plate takes place in a KOH aqueous solution with a concentration of 20 to 30% in weight, through anodic oxidation with a current intensity of 500 to 1,000 A/m² at a temperature between 70 and 100°C.

This invention is exxlained below in greater detail through a preferred embodiment, which however does not have a limiting effect on its scope.

Example 1

An electrode was prepared by welding a nickel wire to a piece of 0.68 g. of unwoven nickel blanket measuring 4.0 cm² and 1.4 mm. thick and 86% porosity, and immersing it in a 4 M solution of nickel nitrate containing 5% of ethanol at 70° C. for 7 minutes. It was then dried in an air draught and immersed in a 16% sodium hydroxide solution at 80-90° C. for 5 minutes. After washing the electrode, it was dried and its increase in weight was determined, which corresponded to the nickel hydroxide which had precipitated in the pores of the unwoven nickel blanket.

The process was repeated 6 times, obtaining the following weight values of the electrode :

    1 - 0.886 g.
    2 - 1.051 g.
    3 - 1.174 g.
    4 - 1.270 g.
    5 - 1.332 g.
    6 - 1.366 g.

The capacity of the electrode obtained in this way was 129 mAh.

Example 2

An electrode was prepared with similar dimensions to the one in example 1, of 0.701 g. of unwoven nickel blanket and 86% porosity, and immersed in a 4 M solution of nickel nitrate, pH = 4 and 0.2 M of cobalt nitrate at 70°C. The two sheets of nickel with similar dimensions were placed together and separated by 1 cm. of nickel blanket and polarised cathodically at 1.44 A. for 15 minutes. After washing the electrodes with water, they were immersed in a 30% potassium hydroxide solution and the nickel blanket was polarised anodically, passing a 0.28 A. current for 40 minutes at 85°C. The electrode was washed several times in water and dried. Its capacity was 111 mAh.

After sufficiently disclosing the nature of the invention, and also the way of executing it in practice, it should be stated that the foregoing arrangements are liable to modification in detail, provided this does not alter its basic principle.

**Claims**

1. - Electrodes with an unwoven nickel or nickel alloy blanket base, characterised in that in the said base they have a chemical or electrochemical deposit of a metal hydroxide, chosen between nickel and cadmium, with a porosity of 60 to 95%, preferably from 80 to 87% of the total volume of the unwoven nickel or nickel alloy blanket base.

2.- Electrodes with an unwoven nickel or nickel alloy blanket base, according to claim 1, characterised in that the said base has nickel or nickel alloy fibrils with a diameter between 5 and 30μm and an average pore size of 10 to 50μm.

3.- A method for obtaining electrodes with unwoven nickel or nickel alloy blanket base, according to claims 1 and 2, characterised in that a metal hydroxide, chosen preferably between nickel hydroxide and cadmium hydroxide, is deposited chemically or electrochemically on the said unwoven nickel or nickel alloy blanket.

4.- A method according to claim 3, characterised in that the chemical impregnation takes place by immersing the unwoven nickel or nickel alloy blanket in an aqueous metal salt solution, preferably chosen between nickel and cadmium nitrates, with a concentration ranging approximately between 3 molar and the saturation point of the salt considered in water, which can contain impregnation enhancing additives of the said unwoven blanket, such as organic solvents, miscible with water with low molecular weight; the said metal salt solution has a high temperature, approximately its boiling point. The impregnated base is then dried and immersed in an alkaline metal hydroxide solution, such as sodium or potassium hydroxide, at a concentration of approximately 10 to 40% in weight and kept at a high temperature.

5.- A method according to claim 4, characterised in that the set of stages of the method is repeated from 1 to 6 times.

6.- A method according to claim 4, characterised in that the aqueous metal salt solution used for the impregnation, contains up to 50% in volume of an organic solvent, miscible with water, with low molecular weight, preferably such as ethanol or isopropanol, acetone and the like.

7.- A method according to claim 4, characterised in that the metal salt impregnation solution has a temperature between 60°C. and its boiling point, the impregnation time being preferably from approximately 3 to 15 minutes.

8.- A method according to claim 4, characterised in that the alkaline hydroxide solution has a temperature between approximately 30 and 90°C.

9.- A method according to claim 3, characterised in that the electrochemical impregnation takes place by passing a cathodic current through the unwoven nickel or nickel alloy blanket, immersed in an aqueous metal salt solution, such as a nickel or cadmium salt, or in a mixture of water and organic solvents, with low molecular weight, miscible with water, such as ethanol, acetone and the like, in a total quantity of up to 50% in volume of the total volume of the bath employed.

10.- A method according to claim 9, characterised in that the metal salt solution also contains reducible anions such as nitrates, chlorates, chromates, acetates or permanganates, whose REDOX potential is more positive than the metal cations present, such as nickel or cadmium; the preferred working conditions of this electrochemical deposition is with a current density of between 100 and 5,000 A/m$^2$ a pH between 3 and 5, a temperature between 50°C. and the boiling point of the solution and a concentration of the metal nickel or cadmium salt between 1.5 M and saturation point.

11. - A method according to claim 9, characterised in that the electrodepositing time ranges between approximately 10 and 120 minutes.

12. A method according to claim 9, characterised in that the polarity of the current which passes through the bath containing the metal salt solution is periodically inverted, regulating the intensity of the anodic pulse, so that it corresponds to 10 to 20% of the intensity of the cathodic pulse, its duration being 1/5 to 1/10 of the duration of the cathodic pulse.

13. A method according to claim 9, characterised in that the nickel salt solution can also contain a cobalt salt, in a concentration equivalent to 5-15% of the concentration of the nickel salt.

14.- A method according to claim 9, characterised in that the formation of the positive plate takes place in an aqueous KCH solution with a concentration of 20 to 30% in weight, through anodic oxidation with a current intensity of 500 to 1,000 A/m$^2$ at a temperature between 70 and 100°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PROC. INTERSOC. ENERGY CONVERS. ENG. CONF., 22nd, 1987, vol. 2, pages 1108-1112; H.H. LAW et al.: "Anovel substrate for nickel-cadmium batteries" * Page 1108, right-hand column; page 1109, left-hand column, paragraphs 1,2; page 1110, left-hand column, paragraph 2-5; page 1110, right-hand column, paragraph 2 * | 1-3,9-11,13,14 | H 01 M 4/80 <br> H 01 M 4/28 <br> H 01 M 4/29 |
| Y | IDEM --- | 4-8 | |
| X | JOURNAL OF POWER SOURCES, vol. 18, nos. 2-3, August-September 1986, pages 235-243, Elsevier Sequoia, Lausanne, CH; O.D. GONZALEZ-SANABRIA et al.: "Recent advances in nickel-hydrogen technology at NASA LEWIS research center" * Page 237, last paragraph; page 238; page 239, paragraph 1 * --- | 1-3,9 | |
| X | PATENT ABSTRACTS OF JAPAN, vol. 9, no. 89 (E-309)[1812], 18th April 1985; & JP-A-59 217 950 (HONDA DENKI K.K.) 08-12-1984 * Abstract * | 1-3,9,10 | TECHNICAL FIELDS SEARCHED (Int. Cl.4) <br><br> H 01 M |
| Y | IDEM --- | 4-8,11-14 | |
| X | US-A-4 337 124 (M.J. MASKALICK) * Column 2, line 46 - column 3, line 8; claims 1,3,5,7,8,10; column 4, lines 50-57 * ---         -/- | 1-3,9,13 | |

The present search report has been drawn up for all claims

| Place of search | Date of completion of the search | Examiner |
|---|---|---|
| THE HAGUE | 18-06-1989 | D'HONDT J.W. |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-2 046 852 (WESTINGHOUSE ELECTRIC CORP.) * Claims 1,2,5,7-10; page 3, lines 18-26; page 4, lines 2-6; page 5, paragraphs 2,3; page 10, paragraphs 3,4 * | 1-3,9, 13 | |
| Y | | 10,14 | |
| Y | JOURNAL OF POWER SOURCES, vol. 16, no. 2, October 1985, pages 131-140, Elsevier Sequoia, Lausanne, CH; W. LEE: "A lightweight nickel composite electrode" * Page 132, paragraph 4; page 133, paragraph 1; page 135, paragraph 3; tables 1,3 * | 10,11, 13 | |
| Y | US-A-4 215 190 (W.A. FERRANDO et al.) * Column 5, lines 28-40,9-11; claim 1 * | 11,13 | |
| A | | 9 | TECHNICAL FIELDS SEARCHED (Int. Cl.4) |
| Y | US-A-3 827 911 (D.F. PICKETT) * Claims 1-4 * | 10,11, 13 | |
| Y | JOURNAL OF POWER SOURCES, vol. 12, nos. 3-4, pages 249-265, Elsevier Sequoia, Lausanne, CH; W. FERRANDO et al.: "A lightweight nickel composite electrode" * Page 254 * | 10 | |
| Y | US-A-3 873 368 (D.F. PICKETT) * Claims 1,4; example 1 * -/- | 10,12 | |

The present search report has been drawn up for all claims

| Place of search | Date of completion of the search | Examiner |
|---|---|---|
| THE HAGUE | 18-06-1989 | D'HONDT J.W. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................
& : member of the same patent family, corresponding
   document

EPO FORM 1503 03.82 (P0401)

European Patent Office

**EUROPEAN SEARCH REPORT**

Application Number

EP 89 50 0019

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 484 346 (E.P. BULAN et al. ) * Claims 1,7,9,10,11; column 2, lines 28-32 * | 1,9,12 | |
| Y | US-A-4 242 179 (D.H. FRITTS et al.) * Claims 1-3 * | 10 | |
| A | | 12 | |
| Y | DE-A-2 731 064 (VOLKSWAGENWERK AG) * Claims 5,8; examples 1,2 * | 4-8 | |
| Y | PATENT ABSTRACTS OF JAPAN, vol. 8, no. 115 (E-247)[1552], 29th May 1984; & JP-A-59 29 374 (SHINKOUBE DENKI K.K.) 16-02-1984 * Abstract * | 4,5,8 | |
| A | PATENT ABSTRACTS OF JAPAN, vol. 11, no. 92 (E-491)[2539], 24th March 1987; & JP-A-61 245 465 (SHIN KOBE ELECTRIC MACH. CO. LTD) 31-10-1986 * Abtract * | 4,6 | TECHNICAL FIELDS SEARCHED (Int. Cl.4) |
| A | EP-A-0 256 929 (SORAPEC) * Claims 1,7 * | 1,3 | |

The present search report has been drawn up for all claims

| Place of search | Date of completion of the search | Examiner |
|---|---|---|
| THE HAGUE | 18-06-1989 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)